# EUROPÄISCHE PATENTSCHRIFT

(11) **EP 3 571 146 B1**
(45) Veröffentlichungstag und Bekanntmachung des Hinweises auf die Patenterteilung: **24.05.2023**
(21) Anmeldenummer: 18700058.3
(22) Anmeldetag: 04.01.2018
(51) Int. Cl.: B65G 47/256, B07B 13/00, B65G 47/52

(54) **SORTIERVERFAHREN FÜR HOHLKÖRPER UND SORTIERVORRICHTUNG**
SORTING METHOD FOR HOLLOW BODIES AND SORTING DEVICE
PROCÉDÉ DE TRI POUR CORPS CREUX ET DISPOSITIF DE TRI

(30) Priorität: 18.01.2017 DE 102017100901
(43) Veröffentlichungstag der Anmeldung: 27.11.2019
(73) Patentinhaber: INTRAVIS Gesellschaft für Lieferungen und Leistungen von bildgebenden und bildverarbeitenden Anlagen und Verfahren mbH, 52068 Aachen (DE)
(72) Erfinder: FUHRMANN, Gerd, 52066 Aachen (DE); SCHÖNHOFF, Klaus, 52146 Würselen (DE); RICK, Michael, 52064 Aachen (DE); LENZEN, Matthias, 52066 Aachen (DE)
(74) Vertreter: Kohlmann, Kai
(86) Internationale Anmeldenummer: PCT/EP2018/050210
(87) Internationale Veröffentlichungsnummer: WO 2018/134059

(56) Entgegenhaltungen:
- EP-A1- 1 120 368
- CH-A2- 702 396

## Beschreibung

Die Erfindung betrifft ein Verfahren und eine Vorrichtung zum Sortieren von einseitig geschlossenen, insbesondere zylindrischen Hohlkörpern mit einer stirnseitigen Öffnung, einer der Öffnung gegenüberliegenden Bodenfläche und einer sich zwischen der Bodenfläche und der Öffnung erstreckenden Mantelfläche.

Verfahren und Vorrichtungen der genannten Art werden insbesondere für das Sortieren von Behälterverschlüssen, die zumeist aus Kunststoff oder nicht magnetischen Metallen bestehen, verwendet.

Für der Herstellung nachgelagerte Verfahrensschritte, beispielsweise die optische Prüfung von Hohlkörpern in einer Prüfvorrichtung, ist es erforderlich, dass sämtliche Hohlkörper lagerichtig, d.h. in gleicher Orientierung dem nachgelagerten Verfahrensschritt zugeführt werden. Je nach Anwendungsfall liegt eine korrekte Orientierung der Hohlkörper vor, wenn entweder deren stirnseitige Öffnung oder die der Öffnung gegenüberliegende Bodenfläche in Richtung einer vorgegebenen Transportebene weist. Hohlkörper mit fehlerhafter Orientierung weisen mit der Öffnung bzw. Bodenfläche in einer zu der vorgegebenen Richtung entgegengesetzten Richtung.

Aus der DE 100 52 062 A1 ist ein Sortiergerät bekannt, dass Behälterverschlüsse nach ihrer Orientierung aufgrund der asymmetrischen Schwerpunktlage sortiert. Das als Steilförderer ausgebildete Sortiergerät besteht aus einem Linearförderer mit einem waagerechten Beladeteil und einem unter einem Winkel von etwa 70 - 85 Grad gegen die Waagerechte geneigten Steilfördererteil. Der Linearförderer wird von einem Förderband gebildet, das in Abständen im rechten Winkel zur Förderrichtung mit Mitnehmern versehen ist, deren Abstände voneinander größer sind als die größten Durchmesser der zum Sortieren bestimmten Behälterverschlüsse. Die Höhe der Mitnehmer ist an die Form der Behälterverschlüsse angepasst und etwas größer, als deren Schwerpunktabstand vom Förderband. In dem Steilförderteil erfolgt der Abwurf der Behälterverschlüsse mit fehlerhafter Orientierung, dies sind diejenigen Behälterverschlüsse, deren Böden von der Oberfläche des Förderbandes abgewandt liegen. In dem Steilförderteil wird die Schwerpunktlage der Behälterverschlüsse mit fehlerhafter Orientierung instabil, wodurch diese sicher abgeworfen werden. Am oberen Ende der Steilförderstrecke des Linearförderers ist eine Übergabeeinrichtung vorgesehen. Diese besteht entweder aus einer motorisch angetriebenen Ausschiebevorrichtung mit der die Behälterverschlüsse mit korrekter Orientierung nach Stillstand des Förderers in einer oder mehreren Reihen in eine Förderrinne oder in eine dieser vorgeschalteten Sammelführung befördert werden, aus der die Behälterverschlüsse in unveränderbarer Anordnung einem nachgelagerten Verfahrensschritt zugeführt werden können. Bei höheren Austragsleistungen der Verschlusselemente erfolgt die Übergabe in der Regel mehrspurig. Die mehrspurig ausgeleiteten Verschlusselemente müssen anschließend wieder einspurig zusammengeführt werden, da die nachgelagerten Verfahrensschritte und Maschinen in der Regel nur eine einspurige Beschickung erlauben. Je nach nachgelagertem Verarbeitungsschritt, insbesondere bei Folding- oder Slitting Prozessen von Verschlusselementen, wird ein fehlerfreies Sortierergebnis erwartet, um Störungen und daraus resultierende Stillstände und gegebenenfalls Reparaturen der zur Durchführung der Prozesse erforderlichen Maschinen zu vermeiden.

Die DE 103 41 481 A1 beschreibt einen vergleichbaren Sortierer für Flaschenverschlüsse mit einer die Flaschenverschlüsse unsortiert aufnehmenden Wanne, einem in die Wanne reichenden, schrägstehenden Bandförderer, der mit Querrippen solcher Tiefe versehen ist, dass nur die mit ihrem Boden zum Bandförderer weisenden Flaschenverschlüsse aufgrund ihrer Schwerpunktlage nach oben gefördert werden. An den Bandförderer schließt im oberen Bereich eine Sammelvorrichtung zur Sammlung und Vereinzelung der für die Weiterverwendung korrekt orientierten Flaschenverschlüsse an, wobei die Sammelvorrichtung aus einer Rutsche gebildet wird, die aus im Wesentlichen zwei im parallelen Abstand zu einander angeordneten Platten besteht, wobei der Abstand etwa der Tiefe der Flaschenverschlüsse entspricht. Hierdurch wird in der Sammelvorrichtung die Beibehaltung der Flaschenverschlüsse in korrekter Orientierung gewährleistet.

Bei den bekannten Sortiereinrichtungen besteht die Gefahr, dass Hohlkörper mit korrekter Orientierung überkippen und dadurch aussortiert werden, was die Sortierleistung beeinträchtigt. Zu dem Aussortieren von Hohlkörpern mit korrekter Orientierung kann es beispielsweise durch Erschütterungen des Bandförderers, insbesondere bei hohen Bandgeschwindigkeiten kommen.

Neben der Schwerkraft wirken in Folge elektrostatischer Aufladung weitere Kräfte auf die Hohlkörper. Die elektrostatische Aufladung hängt unter anderem von dem Material, der Anzahl der Umläufe des einzelnen Hohlkörpers in der Sortiereinrichtung sowie der Luftfeuchtigkeit ab. Die elektrostatische Aufladung kann zu Schwankungen in der Qualität der Sortierung führen. Eine ständige Nachjustierung der Sortiereinrichtung ist daher erforderlich, um derartige Schwankungen auszugleichen.

Des Weiteren erfordern zahlreiche nachgelagerte Verarbeitungsschritte und Maschinen unterschiedliche Sortier- und Austragsleistungen. Die Anpassung der Geschwindigkeit des Förderbandes bei den bekannten Sortierern ist jedoch problematisch, weil eine höhere Geschwindigkeit die Qualität der Sortierung ungünstig beeinflussen kann.

Ein weiteres Problem der bekannten Sortierer besteht darin, dass zahlreiche moderne Verschlusselemente keine deutlich asymmetrische Schwerpunktlage mehr aufweisen, bedingt durch Materialeinsparungen an den Bodenflächen und/oder der erforderlichen Stärke des Garantiebandes. Im Ergebnis sind derartige Verschlüsse mit den bekannten Sortiereinrichtungen kaum noch zuverlässig sortierbar.

Bei nachgelagerten Verfahrensschritten mit hohen Anforderungen an die Qualität der Sortierung, insbesondere bei Prozessen die keinerlei Hohlkörper mit fehlerhafter Orientierung dulden, ist eine Nachsortierung zwingend erforderlich.

Aus der DE 10 2006 039 091 A1 ist eine Vorrichtung zum Zuführen von Schraubverschlüssen zu einer Verschliessmaschine bekannt, welche einen an die Form der Schraubverschlüsse angepassten Querschnitt derart aufweist, dass die Schraubverschlüsse in diesem Förderkanal mit ihrer Verschlussachse in einer durch den Querschnitt des Förderkanals vorgegebenen korrekten oder fehlerhaften Ausrichtung gefördert werden können. Die fehlerhaft ausgerichteten Schraubverschlüsse weisen nicht die für ihre weitere Verarbeitung notwendige Orientierung auf.

Die Vorrichtung verfügt über Mittel zum Ausschleusen fehlerhaft orientierter Schraubverschlüsse aus dem Förderkanal, wobei am Förderkanal wenigstens ein die Orientierung der Schraubverschlüsse erfassender Sensor und auf diesen in Förderrichtung folgend eine von einer elektronischen Steuereinrichtung angesteuerte Ausschleussstation vorgesehen sind, die in Abhängigkeit von dem Sensorsignal für ein Ausschleusen eines fehlerhaft orientierten Schraubverschlusses aktiviert wird. Die Ausschleussstation kann wenigstens eine Düse für eine gesteuerte Abgabe eines unter Druck stehenden dampf- und/oder gasförmigen Mediums zum Ausblasen fehlerhaft orientierter Schraubverschlüsse aufweisen.

Die DE 44 06 511 A1 offenbart ein Verfahren, bei dem Gegenstände, beispielsweise Verschlussstopfen, aus einem Magazin entlang eines Förderweges zu einer Fangposition gefördert werden, in der sämtliche Gegenstände in einer korrekten Ausrichtung positioniert sind. Die Gegenstände werden dem Förderweg zugeführt und zu einer eingangs des Förderwegs angeordneten mechanischen Barriere geleitet, die als Durchlass in dem Förderweg ausgebildet ist. Der Durchlass hat eine Querschnittsform und -größe, die im wesentlichen mit der Querschnittsform und -größe des Gegenstandes übereinstimmt. Auf diese Weise kann ein korrekt positionierter Gegenstand den Durchlass des Förderwegs passieren, während Gegenstände, die am Einlass des Förderweges und an der Barriere inkorrekt positioniert sind zeitweilig durch Druckluftstöße angehoben werden, um korrekt positionierten Gegenständen Platz zu schaffen.

EP 1 120 368 A1 offenbart ein Verfahren zum Sortieren von einseitig geschlossenen Hohlkörpern mit einer stirnseitigen Öffnung, einer der Öffnung gegenüberliegenden Bodenfläche und einer sich zwischen der Bodenfläche und der Öffnung erstreckenden Mantelfläche, umfassend die Schritte:
- Fördern der Hohlkörper in einer Förderrichtung entlang einer Sortierstrecke in einer Sortierzone mit einem Einlauf sowie einem Auslauf und mit einer Förderrichtung entlang der Sortierstrecke, die eine untere Führung, eine der unteren Führung gegenüberliegende obere Führung, eine zwischen der oberen und unteren Führung angeordnete erste Seitenführung und eine der ersten Seitenführung gegenüberliegenden zweite Seitenführung sowie einen Auslass zum Ausleiten aussortierter Hohlkörper aufweist, wobei die Hohlkörper in der Sortierstrecke entweder mit der Bodenfläche oder mit der stinrseitigen Öffnung in Richtung der unteren Führung weisen,
- Hindurchleiten einer ersten Fluidströmung durch die obere Führung und Hindurchleiten einer zweiten Fluidströmung durch die untere Führung,
- Ausrichten der ersten Fluidströmung in Richtung der ersten Seitenführung derart, dass die erste Fluidströmung entweder von außen auf die Bodenfläche jedes Hohlkörpers oder durch die stirnseitige Öffnung hindurch auf einen an der ersten Seitenführung anliegenden Teil der Mantelfläche jedes Hohlkörpers auftrifft,
- Ausrichten einer zweiten Fluidströmung in Richtung der zweiten Seitenführung derart, dass die zweite Fluidströmung entweder von außen auf die Bodenfläche jedes Hohlkörpers oder durch die stirnseitige Öffnung hindurch auf einen in Richtung der zweiten Seitenführung weisenden Teil der Mantelfläche jedes Hohlkörpers auftrifft, wobei die erste und/oder zweite Fluidströmung einen Vektor in Förderrichtung aufweist und
- das Ausrichten der ersten und/oder zweiten Fluidströmung mit Hilfe von mehreren entlang der Sortierstrecke an den oberen und unteren Führungen angeordneten Düsen erfolgt. Die ausgeleiteten Hohlkörper mit fehlerhafter Orientierung werden entlang der zweiten Seitenführung über den Auslass der Sortierzone in eine um 180 Grad tordierte Führung eingeleitet, um sie in die korrekte Orientierung zu wenden, wobei die erste und/oder zweite Fluidströmung einen Vektor in Förderrichtung aufweist und das Ausrichten der ersten und/oder zweiten Fluidströmung mit Hilfe von mehreren entlang der Sortierstrecke an den oberen und unteren Führungen angeordneten Düsen erfolgt.

EP 1 120 368 A1 offenbart auch eine entsprechende Vorrichtung und ein Verfahren nach dem Oberbegriff des Anspruchs 16.

Ferner ist aus der CH 702 396 A2 ein Verfahren zum fortlaufenden Vereinzeln und Ausrichten einer Vielzahl zylindrischer Hohlkörper bekannt, die unter der Wirkung einer Fluidströmung, insbesondere einer Luftströmung in einen sich konisch verjüngenden Behandlungsraum eintragen und entlang einer Führungsfläche in einreihige gegenseitige Berührungen gebracht werden. Anschließend werden die Hohlkörper in Form einer Reihe aus dem Behandlungsraum über einen Ausgangskanal ausgetragen. Bei ihrer Ausrichtung durch den Behandlungsraum werden die Hohlkörper stets von dem Fluidstrom angetrieben und gegen die Führungsfläche gedrückt. Hin und wieder kommt es allerdings vor, dass sich ein Hohlkörper nicht in die Reihe einordnet, sondern mit seiner Mantelfläche an den in der Reihe liegenden Hohlkörpern anliegt. Dieser Hohlkörper wird über einen Schlitz in dem Ausgangskanal ausgesondert. Aus dem Ausgangskanal gelangen die Hohlkörper auf ein Transportband, das die Hohlkörper in einer Reihe hintereinander zu eine Prüfeinrichtung fördert, in der die Hohlkörper einzeln mithilfe einer oder mehrerer Kameras visuell auf Fehler und gegebenenfalls auf die richtige Orientierung geprüft werden. Hohlkörper die fehlerhaft sind oder eine falsche Orientierung aufweisen, werden aus der Reihe ausgeschieden.

Ausgehend von der EP 1 120 368 A1 liegt der Erfindung die Aufgabe zugrunde, ein betriebssicheres Verfahren zum Sortieren von Hohlkörpern zu schaffen, welches die Hohlkörper fehlerfrei in solche mit korrekter und fehlerhafter Orientierung weitgehend unabhängig von der Geschwindigkeit des Förderstroms der Hohlkörper trennt und einen Rückstau der Hohlkörper auf der Auslaufseite toleriert. Des Weiteren soll eine Sortiervorrichtung zur Durchführung des Verfahrens angegeben werden, die einen Rückstau der Hohlkörper auf der Auslaufseite toleriert.

Nach einem ersten Aspekt der Erfindung wird die Aufgabe durch ein Verfahren mit den Merkmalen des Anspruchs 1 sowie eine Vorrichtung mit den Merkmalen des Anspruchs 8 gelöst. Vorteilhafte Ausgestaltungen des erfindungsgemäßen Verfahrens sowie der Vorrichtung zu dessen Durchführung ergeben sich aus den Merkmalen der Unteransprüche.

Zusammenfassend durchlaufen die Hohlkörper mit korrekter Orientierung vorzugsweise geradlinig die Sortierstrecke, während die Hohlkörper mit fehlerhafter Orientierung im Wesentlichen rechtwinklig zur Förderrichtung in Richtung des Auslasses aussortiert werden. Zur Aufrechterhaltung der einreihigen Förderung der Hohlkörper weist die erste und /oder zweite Fluidströmung einen Vektor in Förderrichtung auf.

Kommt es im Auslauf zu einem Stau der Hohlkörper mit korrekter Orientierung, können auch korrekt orientierte Hohlkörper in der Sortierstrecke in Richtung des Auslasses ausweichen. Infolge dieses Effektes können das erfindungsgemäße Verfahren und die Vorrichtung zur Durchführung des Verfahrens einen Rückstau auf der Auslaufseite tolerieren. Es wird kein großer Druck auf die Reihe der Hohlkörper ausgeübt, was für nachfolgende Prozesse und Vorrichtungen vorteilhaft ist, bei denen eine Vereinzelung der Hohlkörper erforderlich ist, wie beispielweise beim Drucken oder Aufdornen.

Die Lösung der Aufgabe nutzt den Effekt, dass ein auf jeden Hohlkörper wirkender Fluidstrom unterschiedliche Kräfte auf den Hohlkörper ausübt, je nachdem an welcher Stelle der Fluidstrom auf den Hohlkörper auftrifft. Die Kraft des Fluidstroms ist um ein Vielfaches größer, wenn der Fluidstrom durch die stirnseitige Öffnung des Hohlkörpers hindurch auf einen Teil der Mantelfläche des Hohlkörpers auftrifft, als wenn der Fluidstrom von außen auf die Bodenfläche des Hohlkörpers auftrifft.

Das erfindungsgemäße Verfahren setzt voraus, dass die Hohlkörper in der Sortierstrecke in einer Reihe entweder mit der Bodenfläche oder mit der stirnseitigen Öffnung in Richtung der unteren Führung weisen. Die Bodenfläche oder die stirnseitige Öffnung liegen dabei auf der unteren, eine Transportebene bildenden Führung auf und/oder gleiten auf einem durch die Fluidströmung auf der unteren Führung ausgebildeten Fluidbett entlang der Sortierstrecke. Eine derartige Lage der Hohlkörper wird beispielsweise durch eine Vorrichtung nach der CH 702 396 A2 gewährleistet.

Die korrekte Orientierung der Hohlkörper hängt vom Anwendungsfall ab. Sofern die Hohlkörper bei korrekter Orientierung mit der Bodenfläche in Richtung der unteren Führung weisen wird die erste Fluidströmung durch die obere Führung und die zweite Fluidströmung durch die untere Führung hindurchgeleitet. Sofern bei korrekter Orientierung die stirnseitigen Öffnungen in Richtung der unteren Führung weisen, wird indes die erste Fluidströmung durch die untere Führung und die zweite Fluidströmung durch die obere Führung hindurchgeleitet.

Die untere, die Transportebene bildende Führung muss nicht zwingend horizontal angeordnet sein, sondern kann eine schiefe Ebene bilden. Die in Bezug zur unteren Führung oberhalb angeordnete obere, ebene Führung ist vorzugsweise parallel zur unteren Führung angeordnet. Die untere und obere Führung werden konstruktiv beispielsweise als Platten ausgeführt. In Betracht kommen jedoch auch die Transportebene aufspannenden Gestänge oder Rahmenkonstruktionen.

Mithilfe von Düsen wird die erste Fluidströmung in Richtung der Seitenführung der Sortierstrecke derart ausgerichtet, dass die erste Fluidströmung entweder von außen auf die Bodenfläche jedes Hohlkörpers oder durch die stirnseitige Öffnung hindurch auf einen an der Seitenführung anliegenden Teil der Mantelfläche jedes Hohlkörpers auftrifft. Die erste Fluidströmung bewirkt daher bei korrekter Orientierung des Hohlkörpers, dass dieser gegen die Seitenführung gedrückt und entlang der Sortierstrecke gefördert wird.

Die Seitenführung kann die Mantelfläche der Hohlkörper linienförmig oder flächig führen. Mindestens ein Fluidaustritt im Bereich der Seitenführung verhindert, dass die erste Fluidströmung sich zwischen der unteren und oberen Führung staut, sofern diese als geschlossene Strukturen, z.B. als Platten ausgeführt sind. Konstruktiv kann die Seitenführung beispielsweise eine Führungsplatte, Führungsstäbe, Führungsleisten oder Spannmittel, wie Drähte oder Seile als Führungsmittel aufweisen.

Mithilfe von Düsen wird die zweite Fluidströmung in Richtung des Auslasses der Sortierstrecke derart ausgerichtet, dass die zweite Fluidströmung entweder von außen auf die Bodenfläche jedes Hohlkörpers oder durch die stirnseitige Öffnung hindurch auf einen in Richtung des Auslasses weisenden Teil der Mantelfläche jedes Hohlkörpers auftrifft. Die zweite Fluidströmung bewirkt daher bei fehlerhafter Orientierung des Hohlkörpers, dass dieser von der Fluidströmung in Richtung des Auslasses von der Fluidströmung verschoben wird.

Über den Auslass werden diejenigen Hohlkörper mit fehlerhafter Orientierung ausgeworfen, auf deren in Richtung des Auslasses weisenden Teil der Mantelfläche die zweite Fluidströmung auftrifft.Vorzugsweise handelt es sich bei der ersten und zweiten Fluidströmung um eine Gasströmung, die insbesondere von einem einzigen, gemeinsamen Gebläse erzeugt wird. Zum Einstellen der Parameter der ersten und/oder zweiten Fluidströmung unabhängig voneinander, d.h. des Volumenstroms und des Überdrucks, sind Stellglieder, wie beispielsweise Stellventile oder Schieber vorgesehen. Alternativ lassen sich die Parameter der ersten und zweiten Fluidströmung unabhängig voneinander über getrennte Gebläse zur Erzeugung der ersten und zweiten Fluidströmung einstellen. Zum Einstellen der Parameter kann die Leistung des Gebläses für die erste - und zweite Fluidströmung individuell angepasst werden und/oder es können jedem Gebläse Stellglieder zugeordnet sein.

Das Bestimmen der vorgenannten Parameter der ersten und zweiten Fluidströmung erfolgt derart, dass
- die auf einen der Hohlkörper in Richtung des Auslasses wirkende Kraft aufgrund der zweiten, auf die Mantelfläche auftreffenden Fluidströmung größer als die auf diesen Hohlkörper in Richtung der Seitenführung wirkende Kraft aufgrund der
   ersten, auf dessen Bodenfläche auftreffenden Fluidströmung ist oder
- die die auf einen der Hohlkörper in Richtung der Seitenführung wirkende Kraft aufgrund der ersten, auf die Mantelfläche auftreffenden Fluidströmung größer als die auf diesen Hohlkörper in Richtung des Auslasses wirkende Kraft aufgrund der zweiten, auf dessen Bodenfläche auftreffenden Fluidströmung ist.

Sofern die untere Führung nicht horizontal angeordnet ist, sondern als schiefe Ebene, wirkt auf jeden Hohlkörper in Richtung des Auslasses oder in Richtung der Seitenführung zusätzlich die Komponente der Gewichtskraft des Hohlkörpers, die auf der schiefen Ebene abwärts gerichtet ist.

Diese Komponente der Gewichtskraft ist bei der Bestimmung der Parameter der ersten und zweiten Fluidströmung ggf. zu berücksichtigen.

Das Ausrichten der ersten und/oder zweiten Fluidströmung erfolgt vorzugsweise mithilfe von mehreren entlang der Sortierstrecke an den oberen und unteren Führungen angeordneten Düsen. Besonders vorteilhaft lassen sich die Düsen in die Führung integrieren, wenn die untere und obere Führung als untere und obere Platten und die Düsen als erste und zweite Durchgänge in den Platten ausgeführt sind. Die Fluidströmung erhält einen Vektor in Förderrichtung, wenn die ersten Durchgänge zur Ausrichtung der ersten Fluidströmung in der oberen oder unteren Platte unter Einschluss eines spitzen Winkels mit der Förderrichtung und unter Einschluss eines spitzen Winkels zu einem Lot auf der unteren oder oberen Platte verlaufen. Die zweiten Durchgänge zur Ausrichtung der zweiten Fluidströmung verlaufen unter Einschluss eines spitzen Winkels mit der Förderrichtung und unter Einschluss eines spitzen Winkels zu einem Lot auf der unteren oder oberen Platte.

Sofern die untere Führung als Platte ausgeführt ist, sind die Durchgänge zur Ausbildung der Düsen derart in der Platte angeordnet, dass ein etwaiger Anspritzpunkt des Hohlkörpers bei der Förderung der Hohlkörper in Förderrichtung nicht über die Ränder der Durchgänge gleitet und sich dort verhaken kann.

Am Ende der Sortierstrecke kann sich eine Trenneinrichtung befinden, die die durch die Sortierstrecke hindurchgeförderten Hohlkörper wieder in einen einreihigen Förderstrom überführt, der hinter der Sortierstrecke vorzugsweise wieder allseitig geführt ist.

Nach einem zweiten Aspekt der Erfindung wird die Aufgabe der Erfindung durch ein Verfahren mit den Merkmalen des Anspruchs 16 gelöst.

Für die weitere Bearbeitung der Hohlkörper in nachgeschalteten Verfahrensschritten, wie beispielsweise die Prüfung und ggf. Aussortierung in optischen Inspektionssystemen, ist es vorteilhaft, wenn sich die Hohlkörper bei der einreihigen Förderung gegenseitig an den Mantelflächen berühren.

Nachfolgend wird die Erfindung anhand der Figuren näher erläutert. Es zeigen
- **Figur 1:**: eine schematische Aufsicht auf eine Vorrichtung zur Durchführung des erfindungsgemäßen Sortierverfahrens nach dem ersten Aspekt der Erfindung,
- **Figur 2:**: einen Schnitt durch eine Sortierstrecke der Vorrichtung nach Figur 1,
- **Figur 3:**: eine schematische teilweise perspektivische Ansicht auf eine Vorrichtung nach Figur 1 sowie
- **Figur 4:**: eine schematische Aufsicht auf ein Ausführungsbeispiel einer Vorrichtung zur Durchführung des erfindungsgemäßen Sortierverfahrens nach dem zweiten Aspekt der Erfindung.

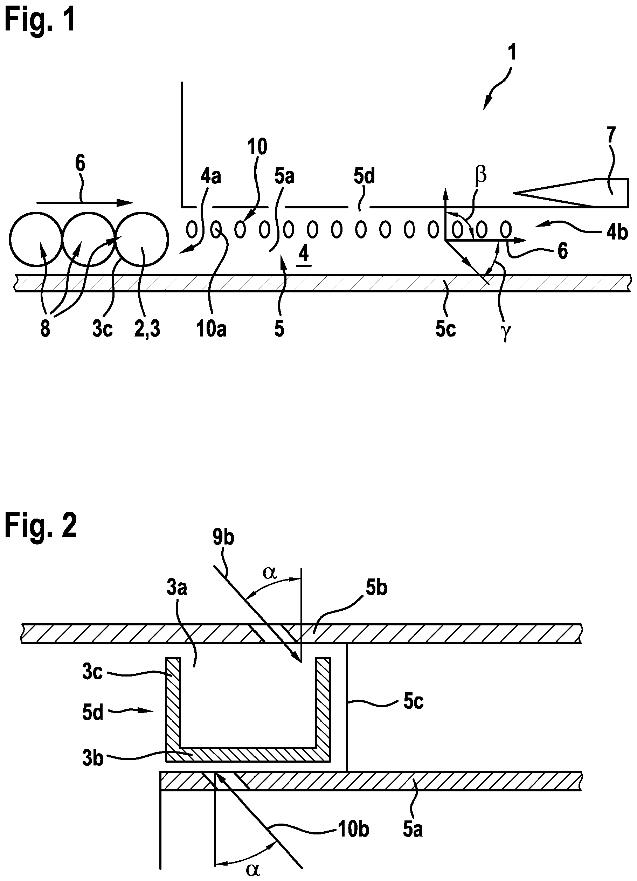

Figur 1 zeigt eine schematische Aufsicht auf eine Vorrichtung (1) zum Sortieren von einseitig geschlossenen zylindrischen Hohlkörpern in Form von Verschlusskappen (3) mit einer stirnseitigen Öffnung (3a), einer der stirnseitigen Öffnung (3a) gegenüberliegenden Bodenfläche (3b) sowie einer sich zwischen der Bodenfläche (3b) und der Öffnung (3a) erstreckenden Mantelfläche (3c) (vgl. Figur 2).

Die Vorrichtung (1) umfasst eine Sortierstrecke (4) mit einem Einlauf (4a) sowie einem Auslauf (4b) mit einer einseitig offenen Führung (5) zum einreihigen Fördern der Verschlusskappen (3) in einer Förderrichtung (6) entlang der Sortierstrecke (4). Die Führung (5) wird von einer unteren Platte (5a), einer der unteren Platte (5a) im parallelen Abstand gegenüberliegenden oberen Platte (5b) und einer sich zwischen der oberen und unteren Platte (5a, 5b) erstreckenden Seitenführung (5c) gebildet. Am Ende der Sortierstrecke (4) befindet sich eine Trenneinrichtung (7), die den am Ende der Sortierstrecke (4) mehrspurigen Förderstrom der Verschlusskappen in einen einspurigen Förderstrom überführt. Der Seitenführung (5c) liegt ein Auslass (5d) gegenüber, über den aussortierte Verschlusskappen (3) ausgeworfen werden.

Der Sortierstrecke (4) wird über den Einlauf (4a) ein einreihiger Förderstrom (8) zugeführt. In dem einreihigen Förderstrom berühren sich die Mantelflächen (3c) der Verschlusskappen (3) vorzugsweise gegenseitig, sodass diese lückenlos zugeführt werden. Die Zufuhr kann beispielsweise mittels eines Vorsortierers oder angetrieben durch eine in Förderrichtung (6) wirksame Fluidströmung, beispielsweise eine Luftströmung erfolgen. Sämtliche Verschlusskappen (3) werden der Sortierstrecke (4) derart zugeführt, dass die Verschlusskappen (3) entweder mit der Bodenfläche (3b) oder mit der stirnseitigen Öffnung (3a) in Richtung der unteren Platte (5a) der Führung (5) weisen.

In dem dargestellten Ausführungsbeispiel weisen die Verschlusskappen (3) dann eine korrekte Orientierung auf, wenn die Bodenfläche (3b) in Richtung der unteren Platte (5a) weist, wie dies insbesondere in Figur 2 zu erkennen ist. Diejenigen Verschlusskappen, deren stirnseitige Öffnung (3a) in Richtung der unteren Platte (5a) weisen, müssen indes auf ihrem Weg entlang der Sortierstrecke (4) aussortiert und über den Auslass (5d) ausgeworfen werden.

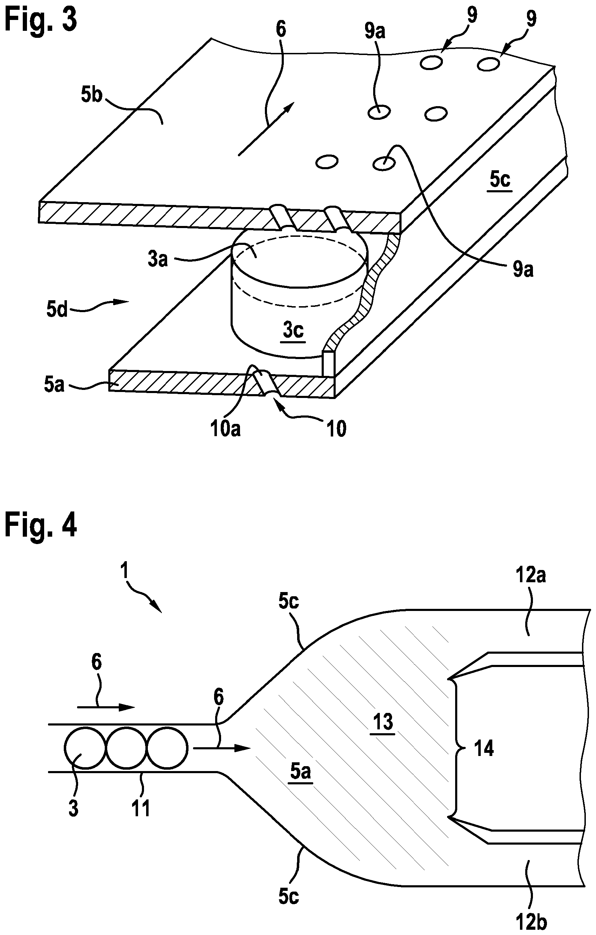

Für diesen Sortierprozess sind an der oberen Platte (5b) zwei Reihen mit ersten Düsen (9) angeordnet, die in Richtung der Seitenführung (5c) derart ausgerichtet sind, dass eine erste Gasströmung (9b) von außen auf die Bodenfläche (3b) jeder in der Sortierstrecke befindlichen Verschlusskappe oder durch die stirnseitige Öffnung (3a) hindurch auf einen an der Seitenführung (5c) anliegenden Teil der Mantelfläche (3c) jeder Verschlusskappe (3) auftrifft. Die Düsenreihen sind, wie aus Figur 3 erkennbar, parallel zur Förderrichtung (6) angeordnet. Die die Düsen (9) bildenden Durchgänge (9a) in der oberen Platte (5b) schließen einerseits einen spitzen Winkel γ mit der Förderrichtung (6) und einen spitzen Winkel α zu einem Lot auf der oberen Platte ein, wodurch die erste Fluidströmung (9b) durch die obere Platte (5a) hindurch auf den an der Seitenführung (5c) anliegenden Teil der Mantelfläche (3c) jeder Verschlusskappe (3) auftrifft und diese in Richtung der Seitenführung (5c) mit einem Strömungsvektor in Förderrichtung (6) beaufschlagt. Hierdurch werden die Verschlusskappen (3) mit korrekter Orientierung in Förderrichtung (6) entlang der Seitenführung (5c) in Richtung des Auslaufs (4b) der Sortierstrecke (4) gefördert.

An der unteren Platte (5a) befindet sich eine einzige weitere Reihe von Düsen (10), die ebenfalls parallel zur Förderrichtung (6) verläuft. Die die Düsen (10) bildenden Durchgänge (10a) in der unteren Platte (5a) verlaufen unter Einschluss des in Figur 1 dargestellten rechten Winkel β mit der Förderrichtung (6) und unter Einschluss eines spitzen Winkels α zu einem Lot auf der unteren Platte (5a) derart, dass die zweite Fluidströmung (10b) entweder von außen auf die Bodenfläche (3b) der Verschlusskappen mit korrekter Orientierung oder auf einen in Richtung des Auslasses (5d) weisenden Teil der Mantelfläche (3c) einer Verschlusskappe mit fehlerhafter Orientierung auftrifft.

Die obere und untere Platte (5a,5b) weisen jeweils eine Stärke von etwa 5 mm auf. Die ersten und zweiten Durchgänge (9a,10a) verfügen über einen Durchmesser von etwa 4-6 mm. Die Länge der Sortierstrecke beträgt etwa 200 mm, was etwa dem siebenfachen Durchmesser der Verschlusskappen (3) entspricht. Der Abstand der Durchgänge in der unteren und oberen Platte (5a,5b) beträgt etwa 15 mm. Der spitze Winkel α, den die Durchgänge (9a,10a) zu einem Lot auf der unteren beziehungsweise oberen Platte (5a,5b) einschließen beträgt etwa 45 Grad (vgl. Figur 2). Der Abstand zwischen der oberen und unteren Platte (5a, 5b) ist lediglich geringfügig größer, beispielsweise um den Faktor 1,1, als die Höhe der zu sortierenden Verschlusskappen, um ein Kippen der Verschlusskappen während des Sortierprozesses sicher zu unterbinden.

Der Volumenstrom der ersten Fluidströmung (9b) zu den ersten Durchgängen (9a) und der Volumenstrom der zweiten Fluidströmung (10b) zu den zweiten Durchgängen (10a) sowie der Überdruck des ersten und zweiten Fluidstroms stimmen in etwa überein und werden von einem in den Figuren nicht dargestellten Gebläse erzeugt. Der Volumenstrom beträgt beispielsweise 24 m³/min und wird mit einem Überdruck von etwa 90 mbar erzeugt.

Die Luftführung der ersten und zweiten Luftströmung oberhalb der oberen und unterhalb der unteren Platte (5a,5b) erfolgt beispielsweise über sich in Förderrichtung (6) oberhalb der oberen Platte (5b) und unterhalb der unteren Platte (5a) erstreckenden Luftführungskanäle bzw. Luftführungskammern, aus denen die unter Druck stehende Luft durch die ersten beziehungsweise zweiten Durchgänge (9a,10a) in Richtung der Verschlusskappen hindurchtritt.

Die Sortierwirkung der vorbeschriebenen Vorrichtung beruht darauf, dass eine Luftströmung mit in etwa übereinstimmenden Parametern (Druck/Volumenstrom) eine um ein Vielfaches größere Kraft auf die Verschlusskappen ausübt, wenn die Luftströmung durch die stirnseitige Öffnung (3a) auf einen Teil der Mantelfläche (3c) strömt, als wenn die selbe Luftströmung von außen auf die Bodenfläche (3b) auftrifft.

Figur 4 zeigt eine Ausführungsform einer Vorrichtung (1)) zur Durchführung eines erfindungsgemäßen Sortierverfahrens nach dem zweiten Aspekt der Erfindung, bei der über einen geschlossenen Zuführkanal (11) Verschlusskappen (3) mit unterschiedlichen Orientierungen in einen Sortierbereich (13) eingebracht werden. Der Sortierbereich (13) wird von einer unteren Platte (5a) und einer im parallelen Abstand dazu angeordneten oberen Platte (5b) sowie ausgehend von dem geschlossenen Zuführkanal (11) beidseitig die untere und obere Platte (5a,5b) verbindenden Seitenführungen (5c) begrenzt. Die Kappen (3) liegen entweder in einer ersten Orientierung mit der Bodenfläche (3b) oder in einer zweiten Orientierung mit der stirnseitigen Öffnung (3a) auf der unteren Platte (5a) auf.

In der unteren Platte (5a) sind eine Vielzahl von Durchgängen als Düsen angeordnet mit deren Hilfe eine zweite Fluidströmung durch die untere Platte hindurch auf jede Verschlusskappe (3) derart ausgerichtet wird, dass die zweite Fluidströmung auf jede Verschlusskappe (3) mit erster Orientierung von außen auf die Bodenfläche (3b) und auf jede Verschlusskappe mit zweiter Orientierung durch die stirnseitige Öffnung (3a) hindurch auf einen Teil der Mantelfläche (3c) der Verschlusskappe (3) auftrifft.

An der oberen Platte sind in gleicher Weise eine entsprechende Anzahl von Durchgängen als Düsen angeordnet, mit deren Hilfe eine erste Fluidströmung (9b) durch die obere Platte (5b) hindurch auf jede Verschlusskappe (3) derart ausgerichtet wird, dass die erste Fluidströmung (9b) auf jede Verschlusskappe (3) mit zweiter Orientierung von außen auf die Bodenfläche (3b) und auf jede Verschlusskappe (3) mit erster Orientierung durch die stirnseitige Öffnung (3a) hindurch auf einen Teil der Mantelfläche (3c) der Verschlusskappe (3) auftrifft.

Die auf jede Verschlusskappe (3) mit erster Orientierung wirkende Kraft aufgrund der ersten auf dessen Mantelfläche (3c) auftreffenden Fluidströmung (9b) ist größer als die auf diese Verschlusskappe wirkende Kraft aufgrund der zweiten, auf deren Bodenfläche (3b) auftreffende Fluidströmung. Die auf jede Verschlusskappe (3) mit zweiter Orientierung wirkende Kraft aufgrund der zweiten, auf deren Mantelfläche (3c) auftreffende Fluidströmung (10b) ist größer als die auf diese Verschlusskappe wirkende Kraft aufgrund der ersten, auf deren Bodenfläche (3b) auftreffenden Fluidströmung.

Die Düsen in der unteren Platte (5a) und der oberen Platte (5b) sind derart eingebracht und ausgerichtet, dass die Wirkrichtung der auf die Mantelfläche (3c) jeder Verschlusskappe mit erster Orientierung wirkende Kraft von der Wirkrichtung der auf die Mantelfläche jeder Verschlusskappe mit zweiter Orientierung wirkende Kraft derart voneinander abweicht, dass die Verschlusskappen (3) mit unterschiedlichen Orientierungen zwischen der unteren und oberen Platte (5a,5b) in unterschiedlichen Richtungen verschoben werden. Die Verschlusskappen (3) erster Orientierung werden beispielsweise quer zur Förderrichtung (6) in Richtung der Seitenführung (5c) in Verlängerung eines ersten Abförderkanals (12a) und die Verschlusskappen mit zweiter Orientierung quer zur Förderrichtung (6) in Richtung der Seitenführung (5c) in Verlängerung eines zweiten Abförderkanals (12b) verschoben. Aufgrund der in Förderrichtung (6) wirksamen Luftströmung in dem Sortierbereich (13) gelangen die derart räumlich voneinander getrennten Verschlusskappen erster Orientierung in den Abförderkanal (12a) und die Verschlusskappen zweiter Orientierung in den Abförderkanal (12b).

Zwischen den beiden Abförderkanälen (12a,12b) ist ein Überlauf (14) angeordnet, um eine Stauung der voneinander getrennten Verschlusskappen (3) unterschiedlicher Orientierung vor den Abförderkanälen (12a, 12b) zu vermeiden.

Der Abförderkanal (12b) kann als eine um 180 Grad tordierte Führung zum Wenden der Verschlusskappen mit zweiter Orientierung ausgeführt sein, sodass die nach der Wendeoperation sämtlich in gleicher Orientierung vorliegenden Verschlusskappen (3) anschließend in einen gemeinsamen Förderstrom mit den Verschlusskappen erster Orientierung aus dem Abförderkanal (12a) zusammengeführt werden können.

| **Nr.** | **Bezeichnung** |
|---|---|
| 1. | Vorrichtung |
| 2. | Hohlkörper |
| 3. | Verschlusskappe |
| 3a. | Öffnung |
| 3b. | Bodenfläche |
| 3c. | Mantelfläche |
| 4. | Sortierfläche |
| 4a. | Einlauf |
| 4b. | Auslauf |
| 5. | Führung |
| 5a. | untere Platte |
| 5b. | obere Platte |
| 5c. | Seitenführung |
| 5d. | Auslass |
| 6. | Förderrichtung |
| 7. | Trenneinrichtung |
| 8. | Förderstrom |
| 9. | erste Düse |
| 9a. | erster Durchgang |
| 9b. | erste Fluidströmung |
| 10. | zweite Düse |
| 10a. | zweiter Durchgang |
| 10b. | zweite Fluidströmung |
| 11. | Zuführkanal |
| 12a. | 1. Abförderkanal |
| 12b. | 2. Abförderkanal |
| 13. | Sortierbereich |
| 14. | Überlauf |

## Patentansprüche

1. Verfahren zum Sortieren von einseitig geschlossenen Hohlkörpern (2) mit einer stirnseitigen Öffnung (3a), einer der Öffnung (3a) gegenüberliegenden Bodenfläche (3b) und einer sich zwischen der Bodenfläche (3b) und der Öffnung (3a) erstreckenden Mantelfläche (3c), umfassend die Schritte:
- Einreihiges Fördern der Hohlkörper (2) in einer Förderrichtung (6) entlang einer Sortierstrecke (4) mit einem Einlauf (4a) sowie einem Auslauf (4b) und mit einer einseitig offenen Führung (5), eingerichtet zum einreihigen Fördern der Hohlkörper (2) in einer Förderrichtung (6) entlang der Sortierstrecke (4), die eine untere Führung, eine der unteren Führung gegenüberliegende obere Führung, eine zwischen der oberen und unteren Führung angeordnete Seitenführung (5c) sowie einen der Seitenführung (5c) gegenüberliegenden Auslass (5d) zum Auswerfen aussortierter Hohlkörper (2) aufweist, wobei die Hohlkörper (2) in der Sortierstrecke (4) entweder mit der Bodenfläche oder mit der stirnseitigen Öffnung in Richtung der unteren Führung weisen,
- Hindurchleiten einer ersten Fluidströmung (9b) durch die obere Führung und Hindurchleiten einer zweiten Fluidströmung (10b) durch die untere Führung oder Hindurchleiten der ersten Fluidströmung (9b) durch die untere Führung und Hindurchleiten der zweiten Fluidströmung (10b) durch die obere Führung,
- Ausrichten der ersten Fluidströmung (9b) in Richtung der Seitenführung (5c) derart, dass die erste Fluidströmung (9b) entweder von außen auf die Bodenfläche (3b) jedes Hohlkörpers (2) oder durch die stirnseitige Öffnung (3a) hindurch auf einen an der Seitenführung (5c) anliegenden Teil der Mantelfläche (3c) jedes Hohlkörpers (2) auftrifft,
- Ausrichten einer zweiten Fluidströmung (10b) in Richtung des Auslasses (5d) derart, dass die zweite Fluidströmung (10b) entweder von außen auf die Bodenfläche (3b) jedes Hohlkörpers (2) oder durch die stirnseitige Öffnung (3a) hindurch auf einen in Richtung des Auslasses (5d) weisenden Teil der Mantelfläche (3c) jedes Hohlkörpers (2) auftrifft, wobei
- die erste und/oder zweite Fluidströmung (9b, 10b) einen Vektor in Förderrichtung (6) aufweist und
- das Ausrichten der ersten und/oder zweiten Fluidströmung (9b, 10b) mit Hilfe von mehreren entlang der Sortierstrecke (4) an den oberen und unteren Führungen angeordneten Düsen erfolgt.

2. Verfahren nach Anspruch 1, **gekennzeichnet durch** den weiteren Schritt:
- Auswerfen derjenigen Hohlkörper (2) mit fehlerhafter Orientierung, auf deren in Richtung des Auslasses (5d) weisenden Teil der Mantelfläche (3c) die zweite Fluidströmung (10b) auftrifft.

3. Verfahren nach Anspruch 1 oder 2, **gekennzeichnet durch** den weiteren Schritt:
- Fördern derjenigen Hohlkörper (2) mit korrekter Orientierung in Förderrichtung (6) bis zum Ende der Sortierstrecke (4), auf deren an der Seitenführung (5c) anliegenden Teil der Mantelfläche (3c) die erste Fluidströmung (9b) auftrifft.

4. Verfahren nach einem der Ansprüche 1 bis 3,
**gekennzeichnet durch** den weiteren Schritt:
- Bestimmen der Parameter der ersten und zweiten Fluidströmung derart, dass
- die auf einen der Hohlkörper (2) in Richtung des Auslasses (5d) wirkende Kraft aufgrund der zweiten, auf die Mantelfläche (3c) auftreffenden Fluidströmung (10b) größer als die auf diesen Hohlkörper (2) in Richtung der Seitenführung (5c) wirkende Kraft aufgrund der ersten, auf dessen Bodenfläche (3b) auftreffenden Fluidströmung (9b) ist oder
- die die auf einen der Hohlkörper (2) in Richtung der Seitenführung (5c) wirkende Kraft aufgrund der ersten, auf die Mantelfläche (3c) auftreffenden Fluidströmung (9b) größer als die auf diesen Hohlkörper (2) in Richtung des Auslasses (5d) wirkende Kraft aufgrund der zweiten, auf dessen Bodenfläche (3b) auftreffenden Fluidströmung (10b) ist.

5. Verfahren nach einem der Ansprüche 1 bis 4, **dadurch gekennzeichnet, dass** die Fluidströmung (9b, 10b) eine Gasströmung ist.

6. Verfahren nach einem der Ansprüche 2 bis 5, **dadurch gekennzeichnet, dass** die über den Auslass (5d) ausgeworfenen Hohlkörper (2) der Sortierstrecke (4) erneut zugeführt werden.

7. Verfahren nach einem der Ansprüche 1 bis 6, **dadurch gekennzeichnet, dass** sich die Hohlkörper (2) bei der einreihigen Förderung gegenseitig berühren.

8. Vorrichtung (1) zum Sortieren von einseitig geschlossenen Hohlkörpern (2) mit einer stirnseitigen Öffnung (3a), einer der Öffnung (3a) gegenüberliegende Bodenfläche (3b) und einer sich zwischen der Bodenfläche (3b) und der Öffnung (3a) erstreckenden Mantelfläche (3c), umfassend
- eine Sortierstrecke (4) mit einem Einlauf (4a) sowie einem Auslauf (4b) und mit einer einseitig offenen Führung (5), eingerichtet zum einreihigen Fördern der Hohlkörper (2) in einer Förderrichtung (6) entlang der Sortierstrecke (4),
- wobei die einseitig offene Führung (5) der Sortierstrecke (4) eine untere Führung, eine der unteren Führung gegenüberliegende obere Führung, eine zwischen der oberen und unteren Führung angeordnete Seitenführung (5c) sowie einen der Seitenführung (5c) gegenüberliegenden Auslass (5d) zum Auswerfen aussortierter Hohlkörper (2) aufweist,
- eine Pumpe oder einen Verdichter zum Erzeugen einer ersten und zweiten Fluidströmung (9b, 10b),
- an der oberen oder unteren Führung angeordnete erste Düsen zum Hindurchleiten der ersten Fluidströmung (9b) und an der gegenüberliegenden Führung angeordnete zweite Düsen zum Hindurchleiten der zweiten Fluidströmung (10b),
- wobei die ersten Düsen in Richtung der Seitenführung (5c) derart ausgerichtet sind, dass die erste Fluidströmung (9b) entweder von außen auf die Bodenfläche (3b) jedes Hohlkörpers (2) oder durch die stirnseitige Öffnung (3a) hindurch auf einen an der Seitenführung (5c) anliegenden Teil der Mantelfläche (3c) jedes Hohlkörpers (2) auftrifft,
- wobei die zweiten Düsen in Richtung des Auslasses (5d) derart ausgerichtet sind, dass die zweite Fluidströmung (10b) entweder von außen auf die Bodenfläche (3b) jedes Hohlkörpers (2) oder durch die stirnseitige Öffnung (3a) hindurch auf einen in Richtung des Auslasses (5d) weisenden Teil der Mantelfläche (3c) jedes Hohlkörpers (2) auftrifft
- wobei die untere und obere Führung als untere und obere Platten (5a, 5b) und die ersten Düsen als erste und die zweiten Düsen als zweite Durchgänge (9a, 10a) ausgeführt sind und die die ersten Durchgänge (9a) unter Einschluss eines spitzen Winkels mit der Förderrichtung (6) und unter Einschluss eines spitzen Winkels zu einem Lot auf der unteren oder oberen Platte (5a, 5b) verlaufen.

9. Vorrichtung nach Anspruch 8, **dadurch gekennzeichnet, dass** eine einzige Pumpe oder ein einziger Verdichter zum Erzeugen der ersten und zweiten Fluidströmung (9b, 10b) eingerichet ist.

10. Vorrichtung nach Anspruch 8 oder 9, **dadurch gekennzeichnet, dass** der Verdichter als Gebläse ausgeführt ist und eine erste und zweite Gasströmung mit einem Überdruck von mehr als 80 mbar erzeugt.

11. Vorrichtung nach einem der Ansprüche 8 - 10, **dadurch gekennzeichnet, dass** der Abstand zwischen der unteren und der oberen Führung größer als die einfache Höhe des Hohlzylinders (2), jedoch kleiner als die einundeinhalbfache Höhe des Hohlzylinders (2) ist.

12. Vorrichtung nach einem der Ansprüche 8 - 11, **dadurch gekennzeichnet, dass**
- die oberen und unteren Platten (5a, 5b) eine Stärke von mindestens 5 mm aufweisen,
- der Durchmesser der ersten und zweiten Durchgänge (9a, 10a) zwischen 4 - 6 mm beträgt und
- die Länge der Sortierstrecke (4) dem 4 - 7 fachen Durchmesser der Hohlkörper (2) entspricht.

13. Vorrichtung nach einem der Ansprüche 8 bis 12, **dadurch gekennzeichnet, dass** die zweiten Durchgänge (10a) unter Einschluss eines rechten Winkels mit der Förderrichtung (6) und unter Einschluss eines spitzen Winkels zu einem Lot auf der unteren oder oberen Platte (5a, 5b) verlaufen.

14. Vorrichtung nach einem der Ansprüche 8 oder 13, **dadurch gekennzeichnet, dass** die ersten Durchgänge (9a) und die zweiten Durchgänge (10a) jeweils in mindestens einer Reihe entlang der Sortierstrecke (4) vorzugsweise in gleichmäßigem Abstand angeordnet sind.

15. Vorrichtung nach einem der Ansprüche 8 bis 14, **dadurch gekennzeichnet, dass** eine in Förderrichtung (6) wirksame Gasströmung die Hohlkörper (2) entlang der Sortierstrecke (4) fördert.

16. Verfahren zum Sortieren von einseitig geschlossenen Hohlkörpern (2) mit einer stirnseitigen Öffnung (3a), einer der Öffnung (3a) gegenüberliegenden Bodenfläche (3b) und einer sich zwischen der Bodenfläche (3b) und der Öffnung (3a) erstreckenden Mantelfläche (3c), umfassend die Schritte:
- Fördern der Hohlkörper (2) zwischen einer unteren Führungsebene und einer der unteren Führungsebene gegenüberliegenden oberen Führungsebene, wobei die Hohlkörper (2) entweder in einer ersten Orientierung mit der Bodenfläche (3b) in Richtung der unteren Führungsebene weisen oder in einer zweiten Orientierung mit der stirnseitigen Öffnung (3a) in Richtung der unteren Führungsebene weisen, wobei die Hohlkörper (2) mittels einer Fluidströmung zwischen der oberen und unteren Führung in einer Förderrichtung (6) gefördert werden,
- Ausrichten einer ersten Fluidströmung (9b) durch die obere Führungsebene hindurch auf jeden Hohlkörper (2) derart, dass die erste Fluidströmung (9b) auf jeden Hohlkörper (2) mit zweiter Orientierung von außen auf die Bodenfläche (3b) und auf jeden Hohlkörper (2) mit erster Orientierung durch die stirnseitige Öffnung (3a) hindurch auf einen Teil der Mantelfläche (3c) des Hohlkörpers (2) auftrifft,
- Ausrichten einer zweiten Fluidströmung (10b) durch die untere Führungsebene auf jeden Hohlkörper (2) derart, dass die zweite Fluidströmung (10b) auf jeden Hohlkörper (2) mit erster Orientierung von außen auf die Bodenfläche (3b) und auf jeden Hohlkörper (2) mit zweiter Orientierung durch die stirnseitige Öffnung (3a) hindurch auf einen Teil der Mantelfläche (3c) des Hohlkörpers (2) auftrifft, wobei
- die auf jeden Hohlkörper (2) mit erster Orientierung wirkende Kraft aufgrund der ersten, auf dessen Mantelfläche (3c) auftreffenden Fluidströmung (9b) größer als die auf diesen Hohlkörper (2) wirkende Kraft aufgrund der zweiten, auf dessen Bodenfläche (3c) auftreffenden Fluidströmung (10b) ist,
- die auf jeden Hohlkörper (2) mit zweiter Orientierung wirkende Kraft aufgrund der zweiten, auf dessen Mantelfläche (3c) auftreffenden Fluidströmung (10b) größer als die auf diesen Hohlkörper (2) wirkende Kraft aufgrund der ersten, auf dessen Bodenfläche (3b) auftreffenden Fluidströmung (9b) ist, und
- die Wirkrichtung der auf die Mantelfläche (3c) jedes Hohlkörpers (2) mit erster Orientierung wirkende Kraft von der Wirkrichtung der auf die Mantelfläche (3c) jedes Hohlkörpers (2) mit zweiter Orientierung wirkende Kraft derart abweicht, dass die Hohlkörper (2) mit unterschiedlichen Orientierungen zwischen der unteren und oberen Führung in unterschiedlichen Richtungen verschoben und dadurch räumlich voneinander getrennt werden, wobei aufgrund der in Förderrichtung wirksamen Luftströmung die räumlich voneinander getrennten Hohlkörper (2) erster Orientierung in einen ersten Abförderkanal (12a) und die Hohlkörper (2) zweiter Orientierung in einen zweiten Abförderkanal (12b) gelangen, **dadurch gekennzeichnet, dass**
- ein zwischen den beiden Abförderkanälen (12a, 12b) angeordneter Überlauf eine Stauung der voneinander getrennten Hohlkörper (2) unterschiedlicher Orientierung vor den Abförderkanälen (12a, 12b) vermeidet.

17. Verfahren nach Anspruch 16, **gekennzeichnet durch** die weiteren Schritte:
- Überführen der räumlich voneinander getrennten Hohlkörper (2) erster Orientierung in einen ersten einreihigen Förderstrom und der Hohlkörper zweiter Orientierung in einen zweiten einreihigen Förderstrom,
- Wenden eines der beiden Förderströme, so dass sämtliche Hohlkörper (2) anschließend in Bezug auf die untere Führung dieselbe Orientierung aufweisen und
- Zusammenführen der beiden Förderströme im Anschluss an das Wenden.

18. Verfahren nach Anspruch 17, **dadurch gekennzeichnet, dass** das Wenden mit Hilfe einer um 180 ° tordierten Führung erfolgt.

19. Verfahren nach einem der Ansprüche 16 bis 18, **dadurch gekennzeichnet, dass** die Fluidströmung eine Gasströmung ist.

20. Verfahren nach einem der Ansprüche 16 bis 19, **dadurch gekennzeichnet, dass** das Ausrichten der ersten und/oder zweiten Fluidströmungen (9b, 10b) mit Hilfe von mehreren an den oberen und unteren Führungen angeordneten Düsen erfolgt.

21. Verfahren nach Anspruch 20, **dadurch gekennzeichnet, dass** die Führungsebenen von Platten (5a, 5b) gebildet werden, in die Durchgänge (9a, 10a) als Düsen eingebracht sind.

## Claims

1. A method for sorting hollow bodies (2) that are closed on one side, having a front-side opening (3a), a base surface (3b) opposite said opening (3a), and a lateral surface (3c) extending between the base surface (3b) and the opening (3a), comprising the steps of:
- conveying the hollow bodies (2) in a single row in a conveying direction (6) along a sorting section (4) having an inlet (4a) and an outlet (4b), and a guide (5) open on one side, which is adapted for conveying the hollow bodies (2) in a single row in a conveying direction (6) along the sorting section (4), said guide comprising a lower guide, an upper guide opposite the lower guide, a lateral guide (5c) disposed between the upper and the lower guide, and an outlet (5d) opposite the lateral guide (5c) for ejecting hollow bodies (2) that have been separated out, wherein the hollow bodies (2) in the sorting section (4) point in the direction of the lower guide either with the base surface or with the front-side opening,
- guiding a first fluid flow (9b) through the upper guide and guiding a second fluid flow (10b) through the lower guide, or guiding the first fluid flow (9b) through the lower guide and guiding the second fluid flow (10b) through the upper guide,
- aligning the first fluid flow (9b) in the direction of the lateral guide (5c) in such a manner that the first fluid flow (9b) either impinges upon the base surface (3b) of each hollow body (2) from the outside, or impinges through the front-side opening (3a) upon a part of the lateral surface (3c) of each hollow body (2) that abuts against the lateral guide (5c),
- aligning a second fluid flow (10b) in the direction of the outlet (5d) in such a manner that the second fluid flow (10b) either impinges upon the base surface (3b) of each hollow body (2) from the outside, or impinges through the front-side opening (3a) upon a part of the lateral surface (3c) of each hollow body (2) that points in the direction of the outlet (5d), wherein
- the first and/or second fluid flow (9b, 10b) has a vector in the conveying direction (6), and
- the aligning of the first and/or the second fluid flow (9b, 10b) is accomplished with the aid of a plurality of nozzles disposed along the sorting section (4) on the upper and lower guides.

2. The method according to Claim 1, **characterized by** the further step:
- ejecting those hollow bodies (2) having a defective orientation, upon the part of the lateral surface (3c) of which pointing in the direction of the outlet (5d) the second fluid flow (10b) impinges.

3. The method according to Claim 1 or 2, **characterized by** the further step:
- conveying in the conveying direction (6) those hollow bodies (2) having the correct orientation as far as the end of the sorting section (4), upon the part of the lateral surface (3c) thereof abutting against the lateral guide (5c) the first fluid flow (9b) impinges.

4. The method according to one of Claims 1 to 3, **characterized by** the further step:
- determining the parameters of the first and the second fluid flow in such a manner that
- the force acting upon one of the hollow bodies (2) in the direction of the outlet (5d) as a result of the second fluid flow (10b) impinging upon the lateral surface (3c) is greater than the force acting on this hollow body (2) in the direction of the lateral guide (5c) as a result of the first fluid flow (9b) impinging upon the base surface (3b) thereof or
- the force acting on one of the hollow bodies (2) in the direction of the lateral guide (5c) as a result of the first fluid flow (9b) impinging upon the lateral surface (3c) is greater than the force acting on this hollow body (2) in the direction of the outlet (5d) as a result of the second fluid flow (10b) impinging upon the base surface (3b) thereof.

5. The method according to one of Claims 1 to 4, **characterized in that** the fluid flow (9b, 10b) is a gas flow.

6. The method according to one of Claims 2 to 5, **characterized in that** the hollow bodies (2) that are ejected via the outlet (5d) are re-supplied to the sorting section (4).

7. The method according to one of Claims 1 to 6, **characterized in that** the hollow bodies (2) are mutually in contact when being conveyed in a single row.

8. A device (1) for sorting hollow bodies (2) that are closed on one side, having a front-side opening (3a), a base surface (3b) opposite said opening (3a), and a lateral surface (3c) extending between the base surface (3b) and the opening (3a), comprising:
- a sorting section (4) having an inlet (4a) and an outlet (4b), and having a guide (5) that is open on one side, that is adapted for conveying the hollow bodies (2) in a single row in a conveying direction (6) along the sorting section (4),
- wherein the guide (5) of the sorting section (4) that is open on one side comprises a lower guide, an upper guide opposite the lower guide, a lateral guide (5c) disposed between the upper and lower guide, and an outlet (5d) opposite the lateral guide (5c) for ejecting hollow bodies (2) that have been separated out,
- a pump or a compressor for generating a first and a second fluid flow (9b, 10b),
- first nozzles, disposed on the upper or lower guide, for guiding the first fluid flow (9b) therethrough, and second nozzles, disposed on the opposite guide, for guiding the second fluid flow (10b) therethrough,
- wherein the first nozzles are aligned in the direction of the lateral guide (5c) in such a manner that the first fluid flow (9b) either impinges upon the base surface (3b) of each hollow body (2) from the outside, or impinges through the front-side opening (3a) upon a part of the lateral surface (3c) of each hollow body (2) that abuts against the lateral guide (5c),
- wherein the second nozzles are aligned in the direction of the outlet (5d) in such a manner that the second fluid flow (10b) impinges upon the base surface (3b) of each hollow body (2) from the outside, or impinges through the front-side opening (3a) upon a part of the lateral surface (3c) of each hollow body (2) pointing in the direction of the outlet (5d),
- wherein the lower and upper guide are configured as lower and upper plates (5a, 5b), and the first nozzles are executed as first passages and the second nozzles are executed as second passages (9a, 10a), and the first passages (9a) run so as to enclose an acute angle with the conveying direction (6) and so as to enclose an acute angle with a perpendicular on the lower or upper plate (5a, 5b).

9. The device according to Claim 8, **characterized in that** a single pump or a single compressor is adapted for generating the first and second fluid flow (9a, 10b).

10. The device according to Claim 8 or 9, **characterized in that** the compressor is executed as a blower and generates a first and second gas flow having a positive pressure of more than 80 mbar.

11. The device according to one of Claims 8-10, **characterized in that** the spacing between the lower and the upper guide is greater than one times the height of the hollow cylinder (2) but less than one-and-a-half times the height of the hollow cylinder (2).

12. The device according to one of Claims 8-11, **characterized in that**
- the upper and lower plates (5a, 5b) each have a thickness of at least 5 mm,
- the diameter of the first and second passages (9a, 10a) is between 4-6 mm and
- the length of the sorting section (4) corresponds to 4 to 7 times the diameter of the hollow bodies (2) .

13. The device according to one of Claims 8 to 12, **characterized in that** the second passages (10a) run so as to enclose a right angle with the conveying direction (6) and so as to enclose an acute angle with a perpendicular on the lower or upper plate (5a, 5b).

14. The device according to one of Claims 8 to 13, **characterized in that** the first passages (9a) and the second passages (10a) are in each case disposed in at least one row along the sorting section (4), preferably at a uniform spacing.

15. The device according to one of Claims 8 to 14, **characterized in that** a gas flow that is active in the conveying direction (6) conveys the hollow bodies (2) along the sorting section (4).

16. A method for sorting hollow bodies (2) that are closed on one side, having a front-side opening (3a), a base surface (3b) opposite said opening (3a), and a lateral surface (3c) extending between the base surface (3b) and the opening (3a), comprising the steps of:
- conveying the hollow bodies (2) between a lower guide plane and an upper guide plane opposite the lower guide plane, wherein the hollow bodies (2) either point in a first orientation with the base surface (3b) in the direction of the lower guide plane, or in a second orientation with the front-side opening (3a) in the direction of the lower guide plane, wherein the hollow bodies (2) are conveyed in a conveying direction (6) by means of a fluid flow between the upper and lower guide,
- aligning a first fluid flow (9b) through the upper guide plane onto each hollow body (2) in such a manner that the first fluid flow (9b) impinges from the outside upon each hollow body (2) having the second orientation on the base surface (3b), and impinges upon each hollow body (2) having a first orientation through the front-side opening (3a) upon a part of the lateral surface (3c) of the hollow body (2),
- aligning a second fluid flow (10b) through the lower guide plane onto each hollow body (2) in such a manner that the second fluid flow (10b) impinges from the outside upon each hollow body (2) having the first orientation on the base surface (3b), and impinges upon each hollow body (2) having a second orientation through the front-side opening (3a) upon a part of the lateral surface (3c) of the hollow body (2), wherein
- the force acting on each hollow body (2) having the first orientation as a result of the first fluid flow (9b) impinging upon the lateral surface (3c) thereof is greater than the force acting on this hollow body (2) as a result of the second fluid flow (10b) impinging upon the base surface (3c) thereof,
- the force acting on each hollow body (2) having the second orientation as a result of the second fluid flow (10b) impinging upon the lateral surface (3c) thereof is greater than the force acting on this hollow body (2) as a result of the first fluid flow (9b) impinging upon the base surface (3b) thereof, and
- the direction of action of the force acting on the lateral surface (3c) of each hollow body (2) having the first orientation differs from the direction of action of the force acting on the lateral surface (3c) of each hollow body (2) having the second orientation in such a manner that the hollow bodies (2) having different orientations are displaced in different directions between the lower and the upper guide and, as a result, are spatially separated from each other, wherein as a result of the fluid flow effective in the conveying direction the spatially separated hollow bodies (2) having the first orientation are conveyed into a first discharge channel (12a) and the hollow bodies (2) having the second orientation are conveyed into a second discharge channel (12b), **characterized in that**
- an overflow arranged between the two discharge channels (12a, 12b) avoids congestion of the separated hollow bodies (2) having different orientation in front of the discharge channels (12a, 12b).

17. The method according to Claim 16, **characterized by** the further steps:
- transferring the spatially separated hollow bodies (2) having the first orientation into a first single-row conveyed flow and the hollow bodies having the second orientation into a second single-row conveyed flow;
- reversing one of the two conveyed flows so that all the hollow bodies (2) subsequently have the same orientation in relation to the lower guide and
- subsequently to the reversing, bringing together the two conveyed flows.

18. The method according to Claim 17, **characterized in that** the reversing is performed with the aid of a guide twisted by 180°.

19. The method according to one of Claims 16 to 18, **characterized in that** the fluid flow is a gas flow.

20. The method according to one of Claims 16 to 19, **characterized in that** the aligning of the first and/or second fluid flows (9a, 10b) is performed using a plurality of nozzles disposed on the upper and the lower guides.

21. The method according to Claim 20, **characterized in that** the guide planes are formed by plates (5a, 5b) in which the passages (9a, 10a) are incorporated as nozzles.

## Revendications

1. Procédé, destiné à trier des corps creux (2) fermés d'un côté, pourvus d'une ouverture (3a) frontale, d'une surface de fond inférieur (3b) opposée à l'ouverture (3a) et d'une surface d'enveloppe (3c) s'étendant entre la surface de fond inférieur (3b) et l'ouverture (3a), comprenant les étapes consistant à :
- transporter sur une rangée les corps creux (2) dans une direction de transport (6) le long d'un trajet de triage (4) pourvu d'une entrée (4a) ainsi que d'une sortie (4b) et pourvu d'un guidage (5) ouvert sur un côté, aménagé pour le transport sur une rangée des corps creux (2) dans une direction de transport (6), le long du trajet de triage (4), qui comporte un guidage inférieur, un guidage supérieur opposé au guidage inférieur, un guidage latéral (5c), placé entre le guidage supérieur et inférieur, ainsi qu'une évacuation (5d) opposée au guidage latéral (5c), destinée à éjecter des corps creux (2) triés, les corps creux (2) dans le trajet de triage (4) étant dirigés soit par la surface de fond inférieur ou par l'ouverture frontale dans la direction du guidage inférieur,
- faire passer un premier courant de fluide (9b) à travers le guidage supérieur et faire passer un deuxième courant de fluide (10b) à travers le guidage inférieur ou faire passer le premier courant de fluide (9b) à travers le guidage inférieur et faire passer le deuxième courant de fluide (10b) à travers le guidage supérieur,
- orienter le premier courant de fluide (9b) dans la direction du guidage latéral (5c), de telle sorte que le premier courant de fluide (9b) soit incident, soit par l'extérieur sur la surface de fond inférieur (3b) de chaque corps creux (2) ou à travers l'ouverture (3a) frontale sur une partie de la surface d'enveloppe (3c) de chaque corps creux (2) qui est adjacente au guidage latéral (5c),
- orienter un deuxième courant de fluide (10b) dans la direction de l'évacuation (5d), de telle sorte que le deuxième courant de fluide (10b) soit incident, soit par l'extérieur sur la surface de fond inférieur (3b) de chaque corps creux (2) ou à travers l'ouverture (3a) frontale sur une partie de la surface d'enveloppe (3c) de chaque corps creux (2) qui est dirigée en direction de l'évacuation (5d)
- le premier et / ou le deuxième courant de fluide (9b, 10b) comportant un vecteur dans la direction de transport (6) et
- l'orientation du premier et / ou du deuxième courant de fluide (9b, 10b) s'effectuant à l'aide de plusieurs buses placées le long du trajet de triage (4), sur les guidages supérieurs et inférieurs.

2. Procédé selon la revendication 1, **caractérisé par** l'étape supplémentaire consistant à:
- éjecter les corps creux (2) dont l'orientation est erronée sur la partie de la surface d'enveloppe (3c) orientée en direction de l'évacuation (5d) desquels le deuxième courant de fluide (10b) est incident.

3. Procédé selon la revendication 1 ou 2, **caractérisé par** l'étape supplémentaire consistant à :
- transporter dans la direction de transport (6) jusqu'à l'extrémité du trajet de triage (4) le corps creux (2) à orientation correcte, sur la partie de la surface d'enveloppe (3c) adjacente au guidage latéral (5c) duquel le premier courant de fluide (9b) est incident.

4. Procédé selon l'une quelconque des revendications 1 à 3, **caractérisé par** l'étape supplémentaire consistant à
- déterminer le paramètre du premier et deuxième courant de fluide, de telle sorte que
- la force agissant sur l'un des corps creux (2) en direction de l'évacuation (5d) sous l'effet du deuxième courant de fluide (10b) incident sur la surface d'enveloppe (3c) soit supérieure à la force agissant sur ledit corps creux (2) en direction du guidage latéral (5c) sous l'effet du premier courant de fluide (9b) incident sur la surface de fond inférieur (3b) de celui-ci ou
- la force agissant sur l'un des corps creux (2) en direction du guidage latéral (5c) sous l'effet du premier courant de fluide (9b) incident sur la surface d'enveloppe (3c) soit supérieure à la force agissant sur ledit corps creux (2) en direction de l'évacuation (5d) sous l'effet du deuxième courant de fluide (10b), incident sur la surface de fond inférieur (3b) de celui-ci.

5. Procédé selon l'une quelconque des revendications 1 à 4, **caractérisé en ce que** le courant de fluide (9b, 10b) est un courant gazeux.

6. Procédé selon l'une quelconque des revendications 2 à 5, **caractérisé en ce que** les corps creux (2) éjectés par l'intermédiaire de l'évacuation (5d) sont ramenés vers le trajet de triage (4)

7. Procédé selon l'une quelconque des revendications 1 à 6, **caractérisé en ce que** lors du transport sur une rangée, les corps creux (2) se touchent mutuellement.

8. Dispositif (1) destiné à trier des corps creux (2) fermés d'un côté, pourvus d'une ouverture (3a) frontale, d'une surface de fond inférieur (3b) opposée à l'ouverture (3a) et d'une surface d'enveloppe (3c) s'étendant entre la surface de fond inférieur (3b) et l'ouverture (3a), qui comprend
- un trajet de triage (4) pourvu d'une entrée (4a) ainsi que d'une sortie (4b) et pourvu d'un guidage (5) ouvert sur un côté, aménagé pour le transport sur une rangée des corps creux (2) dans une direction de transport (6), le long du trajet de triage (4),
- le guidage (5) ouvert sur un côté du trajet de triage (4) comportant un guidage inférieur, un guidage supérieur opposé au guidage inférieur, un guidage latéral (5c), placé entre le guidage supérieur et inférieur, ainsi qu'une évacuation (5d) opposée au guidage latéral (5c), destinée à éjecter des corps creux (2) triés,
- une pompe ou un condenseur, destiné à générer un premier et un deuxième courant de fluide (9b, 10b)
- des premières buses placées sur le guidage supérieur et inférieur, destinées à faire passer le premier courant de fluide (9b) et des deuxièmes buses placées sur le guidage opposé, destinées à faire passer le deuxième courant de fluide (10b),
- les premières buses étant orientées en direction du guidage latéral (5c), de telle sorte que le premier courant de fluide (9b) soit incident, soit par l'extérieur sur la surface de fond inférieur (3b) de chaque corps creux (2) ou à travers l'ouverture (3a) frontale sur une partie de la surface d'enveloppe (3c) de chaque corps creux (2) qui est adjacente au guidage latéral (5c),
- les deuxièmes buses étant orientées en direction de l'évacuation (5d), de telle sorte que le deuxième courant de fluide (10b) soit incident, soit par l'extérieur sur la surface de fond inférieur (3b) de chaque corps creux (2) ou à travers l'ouverture (3a) frontale sur une partie de la surface d'enveloppe (3c) de chaque corps creux (2) qui est orientée en direction de l'évacuation (5d),
- le guidage inférieur et supérieur étant réalisés sous la forme de plaques (5a, 5b) inférieure et supérieure et les premières buses étant réalisées sous la forme de premiers et les deuxièmes buses étant réalisées sous la forme de deuxièmes passages (9a, 10a) et les premiers passages (9a) s'écoulant en incluant un angle aigu avec la direction de transport (6) et en incluant un angle aigu par rapport à un aplomb sur la plaque (5a, 5b) inférieure et supérieure.

9. Dispositif selon la revendication 8, **caractérisé en ce qu'**une seule pompe, ou un seul condenseur est aménagé pour générer le premier et le deuxième courant de fluide (9b, 10b).

10. Dispositif selon la revendication 8 ou 9, **caractérisé en ce que** le condenseur est réalisé sous la forme d'une soufflante et génère un premier et un deuxième courant gazeux, avec une surpression de plus de 80 mbar.

11. Dispositif selon l'une quelconque des revendications 8 à 10, **caractérisé en ce que** l'écart entre le guidage inférieur et supérieur est supérieur à la hauteur simple des cylindre creux (2), toutefois inférieur à une fois et demie la hauteur du cylindre creux (2).

12. Dispositif selon l'une quelconque des revendications 8 à 11, **caractérisé en ce que**
- les plaques (5a, 5b) inférieure et supérieure présentent une épaisseur d'au moins 5 mm,
- le diamètre des premiers et deuxièmes passages (9a, 10a) est compris entre 4 et 6 mm et
- la longueur du trajet de triage (4) correspond à de 4 à 7 fois le diamètre des corps creux (2).

13. Dispositif selon l'une quelconque des revendications 8 à 12, **caractérisé en ce que** les deuxièmes passages (10a) s'écoulent en incluant un angle droit avec la direction de transport (6) et en incluant un angle aigu avec un aplomb sur la plaque (5a, 5b) inférieure et supérieure.

14. Dispositif selon l'une quelconque des revendications 8 ou 13, **caractérisé en ce que** les premiers passages (9a) et les deuxièmes passages (10a) sont placés respectivement sur au moins une rangée, de préférence avec un écart régulier le long du trajet de triage (4).

15. Dispositif selon l'une quelconque des revendications 8 à 14, **caractérisé en ce qu'**un courant gazeux agissant dans la direction de transport (6) transporte les corps creux (2) le long du trajet de triage (4).

16. Procédé, destiné à trier des corps creux (2) fermés d'un côté, pourvus d'une ouverture (3a) frontale, d'une surface de fond inférieur (3b) opposée à l'ouverture (3a) et d'une surface d'enveloppe (3c) s'étendant entre la surface de fond inférieur (3b) et l'ouverture (3a), comprenant les étapes consistant à :
- transporter les corps creux (2) entre un plan de guidage inférieur et un plan de guidage supérieur opposé au plan de guidage inférieur, les corps creux (2) étant dirigés soit avec une première orientation avec la surface de fond inférieur (3b) dans la direction du plan de guidage inférieur ou avec une deuxième orientation avec l'ouverture (3a) frontale dans la direction du plan de guidage inférieur, les corps creux (2) étant transportés au moyen d'un courant de fluide entre le guidage inférieur et supérieur dans une direction de transport (6),
- orienter un premier courant de fluide (9b) à travers le plan de guidage supérieur sur chaque corps creux (2), de telle sorte que le premier courant de fluide (9b) soit incident sur chaque corps creux (2) avec la deuxième orientation, par l'extérieur sur la surface de fond inférieur (3b) et sur chaque corps creux (2) avec la première orientation à travers l'ouverture (3a) frontale sur une partie de la surface d'enveloppe (3c) du corps creux (2),
- orienter un deuxième courant de fluide (10b) à travers le plan de guidage inférieur sur chaque corps creux (2), de telle sorte que le deuxième courant de fluide (10b) soit incident sur chaque corps creux (2) avec la première orientation, par l'extérieur sur la surface de fond inférieur (3b) et sur chaque corps creux (2) avec la deuxième orientation à travers l'ouverture (3a) frontale sur une partie de la surface d'enveloppe (3c) du corps creux (2),
- la force agissant sur chaque corps creux (2) avec la première orientation sous l'effet du premier courant de fluide (9b) incident sur la surface d'enveloppe (3c) de celui-ci étant supérieure à la force agissant sur ledit corps creux (2) sous l'effet du deuxième courant de fluide (10b), agissant sur la surface de fond inférieur (3c) de celui-ci,
- la force agissant sur chaque corps creux (2) avec la deuxième orientation sous l'effet du deuxième courant de fluide (10b) incident sur la surface d'enveloppe (3c) de celui-ci étant supérieure à la force agissant sur ledit corps creux (2) sous l'effet du premier courant de fluide (9b) incident sur la surface de fond inférieur (3b) de celui-ci, et
- la direction d'action de la force agissant sur la surface d'enveloppe (3c) de chaque corps creux (2) avec la première orientation étant divergente de la direction d'action de la force agissant sur la surface d'enveloppe (3c) de chaque corps creux (2) avec la deuxième orientation, de telle sorte que les corps creux (2) soient déplacés avec des orientations différentes entre le guidage inférieur et supérieur dans des directions différentes et soient ainsi séparés les uns des autres dans l'espace, sous l'effet du courant d'air agissant dans la direction de transport, les corps creux (2) de première orientation séparés les uns des autres dans l'espace arrivant dans une première canalisation d'évacuation (12a) et les corps creux (2) de deuxième orientation arrivant dans une deuxième canalisation d'évacuation (12b),
**caractérisé**
- **en ce qu'**un trop-plein placé entre les deux canalisations d'évacuation (12a, 12b) évite une accumulation des corps creux (2) de différentes orientations, séparés les uns des autres à l'avant des canalisations d'évacuation (12a, 12b).

17. Procédé selon la revendication 16, **caractérisé par** les étapes supplémentaires, consistant à :
- transférer les corps creux (2) de première orientation, séparés les uns des autres dans l'espace en un premier flux de transport en une seule rangée et les corps creux de deuxième orientation en un deuxième flux de transport en une seule rangée,
- renverser l'un des deux flux de transport, de sorte que tous les corps creux (2) présentent par la suite la même orientation par rapport au guidage inférieur et
- rassembler les deux flux de transport après les avoir renversés.

18. Procédé selon la revendication 17, **caractérisé en ce que** le renversement s'effectue à l'aide d'un guidage torsionné de 180 °.

19. Procédé selon l'une quelconque des revendications 16 à 18, **caractérisé en ce que** le courant de fluide est un courant gazeux.

20. Procédé selon l'une quelconque des revendications 16 à 19, **caractérisé en ce que** l'orientation des premiers et / ou des deuxièmes courants de fluides (9b, 10b) s'effectue à l'aide de plusieurs buses placées sur les guidages supérieurs et inférieurs.

21. Procédé selon la revendication 20, **caractérisé en ce que** les plans de guidage sont constitués de plaques (5a, 5b), dans lesquels des passages (9a, 10a) sont ménagés en tant que buses.
